# FASCICULE DE BREVET EUROPEEN

(11) **EP 2 970 010 B1**
(45) Date de publication et mention de la délivrance du brevet: **06.09.2017**
(21) Numéro de dépôt: 14715049.4
(22) Date de dépôt: 13.03.2014
(51) Int. Cl.: C04B 28/06, C04B 7/32, C04B 7/345

(54) **CLINKER SULFO-ALUMINEUX À FAIBLE TENEUR EN BÉLITE**
SULFO-ALUMINIUMHALTIGER KLINKER MIT NIEDRIGEM BELIT-GEHALT
SULFO-ALUMINOUS CLINKER WITH A LOW BELITE CONTENT

(30) Priorité: 15.03.2013 FR 1352320
(43) Date de publication de la demande: 20.01.2016
(73) Titulaire: Vicat, 92095 Paris La Défense (FR)
(72) Inventeur: PASQUIER, Michel, F-69006 Lyon (FR); BARNES-DAVIN, Laury, F-38500 Voiron (FR); MERIC, Pascal, F-38300 Bourgoin-jallieu (FR); BEAUVENT, Guy, F-62720 Wierre Effroy (FR)
(74) Mandataire: Agasse, Stéphane
(86) Numéro de dépôt international: PCT/FR2014/050571
(87) Numéro de publication internationale: WO 2014/140488

(56) Documents cités:
- WO-A1-2010/086555
- WO-A1-2011/158105
- WO-A1-2012/010800
- WO-A1-2012/065976
- WO-A2-2006/018569
- FR-A1- 2 941 448
- US-A1- 2011 308 431

## Description

La présente invention a pour objet un nouveau clinker sulfo-alumineux à faible teneur en bélite, ainsi que l'utilisation du clinker pour la préparation de liant hydraulique et, par la suite, de coulis, béton ou mortier.

La fabrication des liants hydrauliques, et notamment celle des ciments, consiste essentiellement en une calcination d'un mélange de matières premières judicieusement choisies et dosées, aussi désigné par le terme de « cru ». La cuisson de ce cru donne un produit intermédiaire, le clinker, qui, broyé avec d'éventuels ajouts minéraux, donnera du ciment. Le type de ciment fabriqué dépend de la nature et des proportions des matières premières ainsi que du procédé de cuisson. On distingue plusieurs types de ciments : les ciments Portland (qui représentent la très grande majorité des ciments produits dans le monde), les ciments alumineux (ou d'aluminate de calcium), les ciments prompts naturels, les ciments sulfo-alumineux, les ciments sulfo-bélitiques et d'autres variétés intermédiaires. Comme ces familles ne sont pas totalement disjointes, il est préférable de les décrire par leurs constituants chimiques et minéralogiques.

Les ciments les plus répandus sont les ciments Portland. Les ciments Portland sont obtenus à partir de clinker Portland, obtenus après clinkérisation à une température de l'ordre de 1450°C d'un cru riche en carbonate de calcium dans un four.

La préparation de tels ciments présente le désavantage de dégager beaucoup de CO₂. L'industrie du ciment est donc aujourd'hui à la recherche d'une alternative valable au ciment Portland, c'est-à-dire des ciments présentant au moins les mêmes caractéristiques de résistance et de qualité que les ciments Portland, mais qui, lors de leur production, dégageraient moins de CO₂.

A ce titre, ces dernières années, les recherches se sont orientées vers les ciments dits sulfo-alumineux et sulfo-bélitiques, qui dégagent moins de CO₂ que les ciments Portland lors de leur production.

Le clinker étant le résultat d'une calcination à haute température, les éléments sont essentiellement présents sous forme d'oxydes. Les clinkers permettant la préparation de ciments sulfo-alumineux ou de ciments sulfo-bélitiques se rapportent à un procédé de fabrication d'un clinker à partir d'un cru constitué par un mélange comprenant les composés CaCO₃, Al₂O₃, et/ou Al(OH)₃ CaSO₄, SiO₂, Fe₂O₃ et/ou un produit contenant de la silice ou des silicates tel que l'argile, tous ces composés étant présents sous forme anhydre ou hydratée, individuellement ou en combinaison. Le cru peut être préparé avec toutes matières minérales naturelles ou synthétiques capables d'apporter du calcium, du silicium, du soufre, du fer et de l'aluminium.

Dans le cadre de ces recherches, de nombreux clinkers sulfo-alumineux ont été décrits. On peut par exemple citer la demande de brevet internationale WO-A-2006/018569 décrivant des clinkers sulfoalumineux bélitiques comprenant 5 à 25% de phase aluminoferrite calcique d'une composition correspondant à la formule générale C₂AF(₁₋ₓ), avec x compris entre 0,2 et 0,8 ; 15 à 35% de phase sulfoaluminate de calcium « yee' limite » (C₄A₃$) ; 40 à 75% de bélite (C₂S) ; et de 0,01 à 10% d'une ou plusieurs phases mineures. Comme mentionné dans cette demande de brevet, de tels clinkers contiennent, en comparaison avec la phase alite (C₃S), la principale composante des ciments Portland, une quantité plus élevée de phase bélite (C₂S), ce qui est tout à fait bénéfique, puisque cela conduit à la réduction des émissions industrielles de CO₂ et de la consommation énergétique. D'autre part, la bélite contribue au développement de la résistance à long terme du ciment sulfo-alumineux bélitique. De même, la demande de brevet internationale WO-A-2010/086555 décrit un clinker sulfo-alumineux comprenant de 5 à 25 % de phase aluminoferrite calcique d'une composition correspondant à la formule générale C₂AₓF₍₁₋ₓ₎, avec x variant de 0,2 à 0,8 ; de 15 à 35% de phase sulfoaluminate de calcium éventuellement dopé en fer correspondant à la formule C₄A₃₋y$Fy avec y variant de 0 à 0,5 ; de 10 à 50% de bélite C₂S, ladite bélite contenant au moins 3% de polymorphe C2Sα ; et de 2 à 25% de silicate de calcium dopé au bore correspondant à la formule C₁₁S₄B. Cependant, les clinkers décrits dans ces demandes de brevet contiennent du bore, ce qui présente un désavantage économique notable compte-tenu du prix et de la rareté de ce constituant.

La demande de brevet internationale WO-A-2012/010800 décrit quant à elle des clinkers sulfo-bélitiques dopés en fer comprenant de 5 à 60 % de phase sulfoaluminate de calcium dopé en fer correspondant à la formule C₄AₓF_{y}$_{z} avec x variant de 2 à 3, y variant de 0 à 0.5 et y étant différent de 0, et z variant de 0.8 à 1.2 ; de 0 à 25 % de phase aluminoferrite calcique d'une composition correspondant à la formule générale C₆A_{x'}F_{y'}, avec x' variant de 0 à 1.5 et y' variant de 0.5 à 3 ; de 20 à 70% de phase bélite C₂S ; et moins de 10% de phase C₁₁S₄B. Le dopage en fer est décrit comme permettant la préparation de ciments présentant une réactivité hydraulique et une résistance accrue en comparaison des clinkers décrits dans la demande de brevet internationale WO 2006/018569, tout en permettant de réduire les émissions de CO₂ de près de 35% lors de leur préparation en comparaison de clinkers de type Portland. De plus, ces clinkers ne nécessitent pas la présence de bore ni l'adjonction d'additifs pour améliorer la qualité des ciments et bétons préparés.

Le temps de prise des liants hydrauliques tels que le ciment, et plus généralement des coulis, bétons et mortiers préparés à partir de ces liants hydrauliques, commence à partir du mélange et malaxage à leur fabrication. Le transport entame donc ce temps de prise et doit être le plus rapide possible afin de préserver un maximum de manoeuvrabilité des coulis, bétons et mortiers pendant leur mise en place. A titre d'exemple, la durée moyenne pour le transport et la mise en oeuvre du béton est de deux heures, au-delà de cette durée, la prise du béton a déjà commencé et sa qualité n'est plus assurée.

Ainsi, bien que le temps de prise des liant hydrauliques préparés à partir des clinkers décrits dans l'art antérieur soient conformes aux normes en vigueur, il demeure toujours intéressant pour l'homme du métier d'augmenter ledit temps de prise autant que possible tout en maintenant la réactivité hydraulique et la résistance à court, moyen et long terme des matériaux préparés.

Il demeure donc intéressant d'identifier de nouveaux clinkers pouvant être préparés à des températures largement inférieures à 1425°C, réduisant ainsi fortement les émissions de CO₂ lors de leur préparation comparé au clinkers dits « Portland », et permettant l'obtention de liants hydrauliques bénéficiant d'un temps de prise accru tout en maintenant leur réactivité hydraulique et leur résistance à court, moyen et long terme.

Dans le passé, de nombreuse publications ont fait état d'un lien existant entre un temps de prise rapide et la présence dans le clinker de la phase C₄A₃$. Ainsi, dans un article intitulé « Understanding expansion in calcium sulfoaluminate-belite cements », Cement and Concrete Research 42 (2012), 51-60, Chen et al. expliquent que les ciments sulfoalumineux bélitiques ont démontré un temps de prise rapide du fait de la réactivité de la phase C₄A₃$. De même, « Characteristics of cement pastes containing sulphoaluminate and belite prepared from nano-materials », Constriction and building materials 38 (2013) 14-21, El-Didamony et al. rappellent que les ciments contenant de l'anhydrite présentent un temps de prise plus court et une meilleure résistance aux courtes échéances.

Or, il a maintenant été trouvé de façon tout à fait surprenante que l'appauvrissement en bélite de certains clinkers sulfo-alumineux permettait d'augmenter significativement le temps de prise des liants hydrauliques préparés à partir de ces clinkers tout en présentant une réactivité hydraulique et une résistance comparable ou supérieure à celles des ciments préparés à partir des clinkers décrits dans la demande de brevet internationale WO-A-2012/010800, et en permettant de réduire les émissions de CO₂ de près de 35% lors de leur préparation en comparaison de clinkers de type Portland.

La présente invention a donc tout d'abord pour objet un clinker sulfo-alumineux comprenant comme composition phasique, par rapport au poids total du clinker :
- de 20 à 90 % de phase sulfoaluminate de calcium dopé en fer correspondant à la formule C₄AₓF_{y}$_{z} avec
   ➢ x variant de 2 à 3,
   ➢ variant de 0.05 à 0.5,
   ➢ et z variant de 0.8 à 1.2 ;
- de 0 à 25 % de phase aluminoferrite calcique d'une composition correspondant à la formule générale C₆A_{x'}F_{y'}, avec x' variant de 0 à 1.5 et y' variant de 0.5 à 3 ; et
- moins de 20% phase bélite C₂S ; et
- moins de 2% de phase C₁₁S₄B.

Le clinker selon la présente invention permet la préparation de liants hydrauliques bénéficiant d'un temps de prise significativement accru en comparaison des liants hydrauliques préparés à partir des clinkers décrits dans l'art antérieur, notamment dans la demande de brevet internationale WO-A-2012/010800. De plus, les liants hydrauliques ainsi préparés présentent une réactivité hydraulique et une résistance comparable à celles des ciments préparés à partir des clinkers décrits dans l'art antérieur tout en permettent de réduire les émissions de CO₂ de près de 35% lors de leur préparation en comparaison de clinkers de type Portland.

Dans le cadre de la présente invention, les notations suivantes sont adoptées pour désigner les composants minéralogiques du ciment :
- C représente CaO ;
- A représente Al₂O₃ ;
- F représente Fe₂O₃ ;
- S représente SiO₂ ; et
- $ représente SO₃.

Ainsi, par exemple, la phase aluminoferrite calcique d'une composition correspondant à la formule générale C₆A_{x'}F_{y'} correspond en réalité à une phase (CaO)_{6.}(Al203)_{x'}(Fe₂O₃)_{y'}.

Dans le cadre de la présente invention, la phase bélite C₂S désigne l'ensemble des polymorphes constituant cette phase, en particulier le polymorphe C₂S_{β} et le polymorphe C₂S_{α'high} (C₂S_{α'h}).

De plus, dans le cadre de la présente invention, les proportions exprimées en % correspondent à des pourcentages massiques par rapport au poids total de l'entité (clinker ou liant hydraulique) considérée.

De préférence, la présente invention a pour objet un clinker sulfo-alumineux tel que défini précédemment dans lequel les caractéristiques suivantes sont choisies seules ou en combinaison :
- le clinker contient de 30 à 80% de phase sulfoaluminate de calcium C₄AₓF_{y}$_{z} ;
- x varie de 2.1 à 2.9, de préférence de 2.2 à 2.8;
- y varie de 0.1 à 0.5 ;
- la phase sulfoaluminate de calcium contient de l'alumine, du fer et du soufre avec x variant de 2.1 à 2.9, de préférence de 2.2 à 2.8, y variant de 0.05 à 0.5, de préférence de 0.1 à 0.5, et z variant de 0.8 à 1.2 ;
- le clinker contient de 0 à 20% de phase aluminoferrite calcique C₆A_{x'}F_{y'};
- x' varie de 0.65 à 1.3 ;
- y' varie de 1.5 à 2.5 ;
- la phase aluminoferrite calcique C₆A_{x'}F_{y'} contient de l'alumine et du fer avec x' variant de 0.65 à 1.3 et y' variant de 1.5 à 2.5 ; et/ou
- le clinker contient moins 1% de phase C₁₁S₄B, de préférence encore moins de 0,5% de phase de phase C₁₁S₄B. De façon toute à fait préférée, le clinker est exempt de phase C₁₁S₄B.

Le clinker selon la présente invention contient donc de faibles teneurs de phase bélite (C₂S). De préférence, la présente invention a pour objet un clinker sulfo-alumineux tel que défini précédemment contenant moins de 19%, de préférence moins de 17%, de préférence encore moins de 15% de phase bélite C₂S. De façon tout à fait préférée, la présente invention a pour objet un clinker sulfo-alumineux tel que défini précédemment contenant moins de 13%, de préférence moins de 11%, de préférence encore moins de 9% de phase bélite C₂S.

Préférentiellement, les clinkers selon l'invention sont totalement exempts de bore additionné de manière intentionnelle

D'autres phases minoritaires peuvent apparaître dans la constitution du clinker. Ces phases mineures peuvent être constituées de la chaux libre CaOl, de l'anhydrite C$, de la Géhlénite C₂AS, de la Mayenite C₁₂A₇, de la Périclase MgO, de la Perovskite CT, C₃FT, C₄FT₂. De façon préférée, le clinker selon l'invention contient :
- moins de 3% de CaOl, de préférence moins de 1% de CaOl;
- moins de 5% de C$, de préférence moins de 2% de C$ ; et/ou
- moins de 10% de C₂AS, de préférence moins de 5% de C₂AS.

Le clinker selon la présente invention doit être préparé dans des conditions précises afin d'éviter tout phénomène de collage au cours de la cuisson. A titre d'exemple, un procédé de préparation d'un clinker tel que décrit précédemment peut comprendre les étapes suivantes :
1) préparation d'un cru à partir des matières premières suivantes :
   - de 0.1 à 40% de bauxite, marnes, boues rouges et/ou de toutes autres roches sédimentaires, métamorphiques ou magmatiques ou dérivés minéraux de l'industrie à forte teneur en aluminium et à teneur en SiO2 inférieure à 20%;
   - de 0.1 à 12% de gypse, borogypse, phosphogypse, desulfogypse, anhydrite et/ou hémihydrate ;
   - de 0.1 à 55% de calcaire et/ou de toutes autres roches sédimentaires, métamorphiques ou magmatiques ou dérivés minéraux de l'industrie à forte teneur en calcium ;
   - de 0 à 5% de quartz, silice, silice expansée, fumée de silice ou de toutes autres roches sédimentaires, métamorphiques ou magmatiques ou dérivés minéraux de l'industrie à forte teneur en silicium ; et
   - de 0 à 12% d'oxyde de fer et/ou sulfate de fer et/ou sulfures de fer et/ou toutes matières minérales naturelles ou synthétiques riches en fer et/ou en soufre ;
2) mélange (éventuellement par cobroyage) des matières premières,
3) cuisson du mélange des matières premières à une température T2 allant de 1150°C à 1300°C selon les étapes suivantes :
   a) passage de la température ambiante à une température allant de 800°C à 1200°C sur une période de temps t1 allant de 20 à 500 minutes,
   b) montée en température jusqu'à la température finale souhaitée T2, sur une période de temps t2 allant de 15 à 60 minutes,
   c) maintien de la température à T2, sur une période de temps t3 allant de 0 à 60 minutes,
   d) diminution de la température de T2 à T3, T3 étant supérieure ou égale à 1100°C, sur une période de temps t4 allant de 0 à 15 minutes,
   e) trempe et refroidissement rapide du clinker jusqu'à la température ambiante, sur une période de temps t5 allant de 5 à 60 minutes.

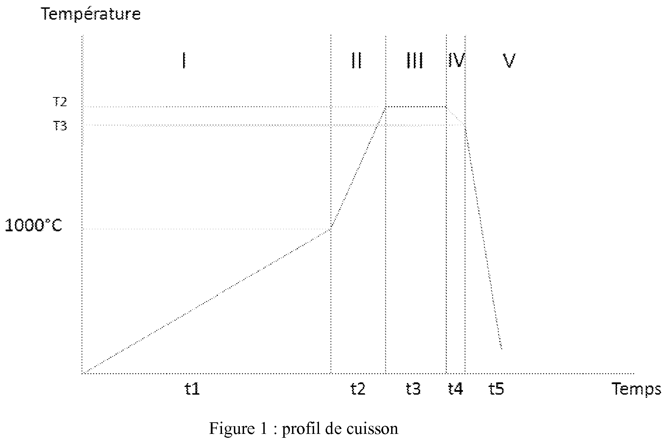

Pour plus de clarté, le profil de température suivi pour procéder à la cuisson du cru selon le procédé de l'invention est illustré par la Figure 1.

De préférence, l'étape de cuisson du procédé selon la présente invention est conduite à une température T2 allant de 1250°C à 1300°C.

De façon préférée, l'étape de cuisson du procédé selon la présente invention est conduite à une température T2, dans les conditions suivantes :
a) passage de la température ambiante à 1000°C sur une période de temps t1 allant de 90 min à 420 minutes,
b) montée en température jusqu'à la température finale souhaitée T2, sur une période de temps t2 allant de 25 à 45 minutes,
c) maintien de la température à T2, sur une période de temps t3 allant de 0 et 30 minutes,
d) diminution de la température de T2 à 1200°C, sur une période de temps t4 allant de 5 à 10 minutes,
e) trempe et refroidissement rapide du clinker jusqu'à la température ambiante en 10 minutes.

Le clinker selon la présente invention peut être préparé à partir de différentes matières premières telles que les boues rouges, la bauxite, le calcaire, les marnes, le gypse ou toute autre source de sulfate de calcium, la silice, les oxydes de fer, les sulfate de fer et les sulfures de fer naturels ou leurs sous-produits respectifs, et toute matière minérale capable d'apporter CaO, Al₂O₃, Fe₂O₃, SiO₂ et SO₃ en quantités adéquates ou en mélanges.

La qualité de la cuisson, et notamment les respects en tout point d'une atmosphère oxydante et des températures maximum de 1350°C, est fondamentale. La préparation des clinkers selon l'invention se fera donc dans un four permettant le respect de ces conditions. A titre d'exemple de fours appropriés pour préparer les clinkers selon la présente invention, on peut citer le four décrit dans la demande de brevet internationale publiée sous le numéro WO-A-2009/122065. Le four décrit dans cette demande de brevet est particulièrement approprié pour la préparation de clinkers selon l'invention car il contribue à respecter le profil thermique précédemment décrit.

Le clinker selon la présente invention peut être utilisé pour préparer un liant hydraulique, par exemple du ciment, par broyage et éventuel ajout de gypse, d'anhydrite ou d'hémihydrate. La présente invention concerne donc également un liant hydraulique comprenant un clinker tel que décrit précédemment sous forme broyé. Préférentiellement, le liant hydraulique selon la présente invention comprend également un ajout de gypse, d'anhydrite ou d'hémihydrate, dans des proportions pouvant aller jusqu'à 25%.

Le liant hydraulique selon la présente invention peut également comprendre des ajouts du même type que ceux utilisés pour le ciment Portland tels que par exemple le calcaire, les pouzzolanes naturelles et artificielles, le laitier de haut fourneau, les cendres volantes de foyers au charbon et les fumées de silice. Cet ajout est réalisé par mélange avant ou après le broyage des constituants, par mélange des poudres ou par cobroyage. La prise du liant est alors la résultante de l'activation des ajouts par le clinker. En conséquence l'économie de CO₂ par rapport à un ciment de type CEM I (suivant la norme EN 197-1) peut être considérable, allant jusqu'à 90% de réduction des émissions de CO₂ selon la teneur en ajout.

De plus, pour améliorer les performances mécaniques du liant hydraulique, on pourra ajouter de 1 à 10% de calcaire (CaCO₃) finement broyé ou « filler ». L'ajout de « filler » peut être réalisé par mélange avant ou après le broyage des constituants, par mélange des poudres ou par cobroyage.

Enfin, la présente invention concerne également les différents produits préparés à partir du liant décrit précédemment, en particulier les coulis, les bétons et les mortiers. Ainsi, la présente invention a également pour objet un coulis, un béton ou un mortier comprenant le liant hydraulique tel que décrit précédemment.

La présente invention peut être illustrée de façon non limitative par les exemples suivants.

### Exemple 1 - Clinkers 1 à 5

Plusieurs crus ont été préparés avec les matières premières dont les analyses chimiques sont rapportées en pourcentages massiques dans les tableaux suivants.

### Bauxite

**Tableau 1**

| **Éléments** | **Bauxite 1** | **Bauxite 2** | **Bauxite 3** | **Bauxite 4** | **Bauxite 5** |
|---|---|---|---|---|---|
| **SiO₂ (en %)** | 21.86 | 22.13 | 14.2 | 5.73 | 5.57 |
| **Al₂O₃ (en %)** | 38.48 | 38.8 | 53.45 | 46.19 | 53.73 |
| **CaO (en %)** | 2.1 | 2.44 | 1.12 | 3.15 | 0.60 |
| **MgO (en %)** | 0.16 | 0.17 | 0.14 | 0.17 | 0.01 |
| **Fe₂O₃ (en %)** | 21.15 | 20.31 | 12.21 | 12.96 | 10.22 |
| **TiO₂ (en %)** | 1.86 | 1.85 | 3.29 | 2.74 | 2.67 |
| **K₂O (en %)** | 0.1 | 0.1 | 0.06 | 0.07 | 0.04 |
| **Na₂O (en %)** | 0 | 0 | 0 | 0 | 0.04 |
| **P₂O₅ (en %)** | 0.18 | 0.18 | 0.21 | 0.11 | 0.06 |
| **Mn₂O₃ (en %)** | 0.03 | 0.03 | 0.03 | 0.04 | 0.02 |
| **SO₃ (en %)** | 0.04 | 0.07 | 0.3 | 0.25 | 0.07 |
| **Autres (en %)** | 0.02 | 0.17 | 0.03 | 0.03 | |
| **Perte au feu (en %)** | 13.42 | 13.75 | 14.92 | 28.15 | 26.74 |
| **Total** | **99**.**40** | **100** | **99**.**96** | **99**.**59** | **99**.**77** |

On entend par perte au feu la perte de masse constatée après cuisson à 950°C.
Bauxites 1, 2 et 3 : Bauxite origine Sodicapei Villeveyrac.
Bauxite 4 : Bauxite d'origine indienne.
Bauxite 5 : Bauxite Weipa origine Australie.

### Calvaire

**Tableau 2**

| **Éléments** | **Calcaire 1** | **Calcaire 2** | **Calcaire 3** | **Calcaire 4** |
|---|---|---|---|---|
| **Si**O**₂ (en %)** | 1.42 | 1.77 | 1.55 | 1.83 |
| **Al₂O₃ (en %)** | 0.35 | 2.82 | 0.38 | 0.23 |
| **CaO (en %)** | 54.31 | 50.8 | 54.51 | 54.83 |
| **MgO (en %)** | 0.31 | 0.82 | 0.33 | 0.33 |
| **Fe₂**O**₃ (en %)** | 0.20 | 0.79 | 0.21 | 0.2 |
| **TiO₂ (en %)** | 0.03 | 0.18 | 0.03 | 0.02 |
| **K₂O (en %)** | 0.08 | 0.05 | 0.04 | 0.03 |
| **Na₂O (en %)** | 0 | 0.02 | 0 | 0 |
| **P₂O₅ (en %)** | 0.01 | 0.05 | 0.01 | 0.01 |
| **Mn₂O₃ (en %)** | 0.01 | 0.01 | 0.01 | 0.01 |
| **SO₃ (en %)** | 0.01 | 1.03 | 0.02 | 0.02 |
| **Autres (en %)** | 0.05 | 0.03 | 0 | |
| **Perte au feu (en %)** | 42.76 | 40.94 | 42.87 | 42.69 |
| **Total** | **99**.**54** | **99**.**31** | **99**.**96** | **100**.**2** |

On entend par perte au feu la perte de masse constatée après cuisson à 950°C.

Calcaire 1, 2, 3 et 4 : Calcaire Urgonien extrait en Isère.

### Anhydrite et Gypse

**Tableau 3**

| **Éléments** | **Anhydrite** | **Gypse 1** | **Gypse 2** |
|---|---|---|---|
| **Si**O**₂ (en %)** | 0.04 | 0.33 | 0 |
| **Al₂O₃ (en %)** | 0.14 | 0.31 | 0 |
| **CaO (en %)** | 42.19 | 31.18 | 32.81 |
| **MgO (en %)** | 0.16 | 0.02 | 0 |
| **Fe₂O₃ (en %)** | 0.22 | 0.27 | 0.02 |
| **TiO₂ (en %)** | 0.03 | 0.05 | 0.02 |
| **K₂O (en %)** | 0.01 | 0.05 | 0.03 |
| **Na₂O (en %)** | 0.02 | 0.05 | 0.14 |
| **P₂O₅ (en %)** | 0.04 | 0.41 | 0.02 |
| **Mn₂O₃ (en %)** | 0 | 0 | 0 |
| **SO₃ (en %)** | 54.75 | 43.99 | 46.29 |
| **Autres (en %)** | 0 | 2.32 | 0.02 |
| **Perte au feu (en %)** | 1.99 | 20.28 | 20.72 |
| **Total** | **99**.**59** | **99**.**26** | **100**.**07** |

On entend par perte au feu la perte de masse constatée après cuisson à 950°C.

Anhydrite: sous produit industriel issu de l'industrie du fluor.
Gypse 1 : sous produit industriel issu de la fabrication d'acide phosphorique
Gypse 2 : produit de laboratoire de la marque Merck.

### Silice et oxydes de fer

**Tableau 4**

| **Éléments** | **Silice** | **Oxyde de Fer** |
|---|---|---|
| **SiO₂ (en %)** | 99.31 | 0 |
| **Al₂O₃ (en %)** | 0 | 0 |
| **CaO (en %)** | 0.1 | 0 |
| **MgO (en %)** | 0 | 0 |
| **Fe₂O₃ (en %)** | 0.2 | 100 |
| **TiO₂ (en %)** | 0 | 0 |
| **K₂O (en %)** | 0.04 | 0 |
| **Na₂O (en %)** | 0.01 | 0 |
| **P₂O₅ (en %)** | 0 | 0 |
| **Mn₂O₃ (en %)** | 0.02 | 0 |
| **SO₃ (en %)** | 0 | 0 |
| **Autres (en %)** | 0.02 | 0 |
| **Perte au feu (en %)** | 0.15 | 0 |
| **Total** | **99**.**85** | **100** |

On entend par perte au feu la perte de masse constatée après cuisson à 950°C.

Silice pure de type Silice Sifraco.

Oxyde de fer pur ou issu de l'extraction minière.

### Préparation des clinkers 1 à 5

Pour chaque clinker, un mélange intime des différents constituants a été effectué dans les proportions rapportées dans le tableau 5 suivant (tout passant à 100 µm).

**Tableau 5**

| | **Bauxite** | | **Gypse** | | **Anhydrite (en %)** | **Calcaire** | | **Silice (en %)** | **Oxyde de fer (en %)** |
|---|---|---|---|---|---|---|---|---|---|
| | ***n°*** | **%** | ***n°*** | **%** | | ***n°*** | **%** | | |
| **Clinker 1** | *1* | 37.2 | - | - | 10.4 | *1* | 52.4 | - | - |
| **Clinker 2** | *2* | 33.6 | *1* | 11.2 | - | *2* | 55.2 | - | - |
| **Clinker 3** | *3* | 40.1 | - | - | 12.2 | *3* | 47.7 | - | - |
| **Clinker 4** | *4* | 41.6 | *2* | 13.6 | - | *4* | 42.3 | 2 | 0.5 |
| **Clinker 5** | *5* | 40.6 | *2* | 14.7 | - | *1* | 41.6 | - | 3.1 |

Une cuisson dans un four à passage tel que celui décrit dans la demande de brevet WO-A-2009/122065, à été réalisée à 1305°C pendant 30 minutes.

Le mélange cru est introduit dans la tour de préchauffage et chauffé depuis la température ambiante jusqu'à 1050°C en 410 minutes au fur et à mesure de sa descente dans la tour, par les gaz remontant à contre-courant dans celle-ci.

La matière est ensuite admise dans la section horizontale du four à passage via un extracteur, et amenée jusqu'à la zone de clinkérisation (1305°C) sur une période de 30 minutes et la température est maintenue pendant 30 minutes.

En sortie de la zone de clinkérisation, la température diminue jusqu'à 1200°C sur une période de 6 minutes.

Enfin, le clinker est envoyé dans le refroidisseur où il subit une trempe rapide pour atteindre la température ambiante en 10 minutes.

La chimie « réelle » des clinkers obtenus est rapportée dans le Tableau 6 suivant.

**Tableau 6**

| | **Clinker 1** | **Clinker 2** | **Clinker 3** | **Clinker 4** | **Clinker 5** |
|---|---|---|---|---|---|
| **SiO₂ (en %)** | 12.77 | 12.09 | 8.92 | 7.51 | 4.35 |
| **Al₂O₃ (en %)** | 20.22 | 20.42 | 29.53 | 28.97 | 32.30 |
| **CaO (en %)** | 47.10 | 46.62 | 42.64 | 42.66 | 40.55 |
| **MgO (en %)** | 0.32 | 0.67 | 0.28 | 0.32 | 0.2 |
| **Fe₂O₃ (en %)** | 10.54 | 10.11 | 6.86 | 8.93 | 10.57 |
| **TiO₂ (en %)** | 1.08 | 1.13 | 2.02 | 1.9 | 1.82 |
| **K₂O (en %)** | 0.10 | 0.11 | 0.08 | 0.08 | 0.04 |
| **Na₂O (en %)** | 0.01 | 0.03 | 0.02 | 0.04 | 0 |
| **P₂O₅ (en %)** | 0.1 | 0.19 | 0.13 | 0.08 | 0.04 |
| **Mn₂O₃ (en %)** | 0.02 | 0.02 | 0.02 | 0.03 | 0.01 |
| **SO₃ (en %)** | 7.13 | 7.59 | 9.26 | 9.36 | 10.42 |
| **Autres (en %)** | 0.02 | 0.3 | 0.03 | 0 | 0.01 |
| **Perte au feu (en %)** | 0.41 | 0.39 | 0.41 | 0.31 | 0.08 |
| **Total** | **99**.**82** | **99**.**67** | **100**.**2** | **100**.**19** | **100**.**39** |

On entend par perte au feu la perte de masse constatée après cuisson à 950°C.

Les phases cristallographiques obtenues pour chaque clinker et ainsi que leur pourcentage sont rapportées dans le Tableau 7 suivant.

**Tableau 7**

| | | **Clinker 1** | **Clinker 2** | **Clinker 3** | **Clinker 4** | **Clinker 5** |
|---|---|---|---|---|---|---|
| **C₄AₓF_{y}$_{z}** | *x* | *2.35* | *2.27* | *2.95* | *2.56* | *2.62* |
| | *y* | *0.33* | *0.29* | *0.05* | *0.29* | *0.18* |
| | *z* | *1.09* | *1* | *1* | *1.03* | *0.98* |
| | % | 44 | 45 | 58.6 | 69.6 | 71.3 |
| **C₆A_{x'}F_{y'}** | *x'* | *1* | *1* | *1* | *0* | *0.9* |
| | *y'* | *2.23* | *2.37* | *2.22* | *0* | *2.1* |
| | % | 12 | 9.8 | 1.4 | 0 | 7.7 |
| **C₂S_{β} (en %)** | | 30.4 | 28.9 | 13.9 | 11.2 | 8.4 |
| **C₂S_{α'h} (en %)** | | 4.8 | 5.5 | 9 | 7.6 | 0 |
| **Autres phases (en %)** | | 8.8 | 10.8 | 17.1 | 11.6 | 12.6 |

### Exemple 2 - Ciments 1 à 5

### Préparation des ciments 1 à 5

Les clinkers 1 à 5 obtenus selon l'exemple 1 précédent ont été broyés avec respectivement 10, 10, 12, 14.5 et 15.5% d'anhydrite 1 de sorte que le refus à 100 µm soit nul.

Les ciments ainsi obtenus à partir des clinkers 1 à 5 sont respectivement désignés par ciment 1, ciment 2, ciment 3, ciment 4 et ciment 5.

### Temps de prise

Le début de prise et la fin de prise sont évalués selon la norme EN196-3 sur pâte pure ciment avec recherche du E/C par mesure de la consistance grâce à l'appareil de Vicat.

Les temps de prise des ciments 1 à 5 sont rapportés dans le Tableau 8 suivant.

**Tableau 8**

| | **Ciment 1** | **Ciment 2** | **Ciment 3** | **Ciment 4** | **Ciment 5** |
|---|---|---|---|---|---|
| **E/C** | 0.27 | 0.32 | 0.27 | 0.28 | 0.27 |
| **Début de prise (en min)** | 12 | 15 | 21 | 75 | 122 |
| **Fin de prise (en min)** | 27 | 40 | 49 | 147 | 219 |

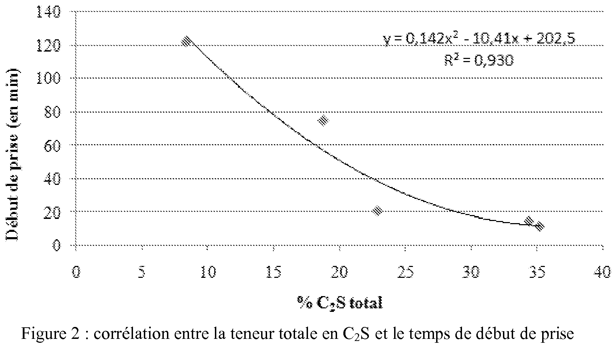

Les résultats obtenus ont permis d'établir la corrélation existant entre la teneur totale en C2S et le temps de début de prise (Figure 2).

On remarque que les ciments préparés à partir de clinkers contenant moins de 20% de C₂S (ciments 4 et 5) possèdent un temps de prise significativement rallongé par rapport aux ciments préparés à partir de clinkers contenant plus de 20% de C₂S (ciments 1 à 3).

Le ciment 5 possède même un temps de début de prise comparable à des ciments à base de clinker Portland.

### Résistance mélanique

A partir de ces ciments, on réalise un mortier selon la norme EN196-1 dont la composition est la suivante :
- 450g de ciment ;
- 1350g de sable normalisé ;
- 225g d'eau.

La résistance mécanique du mortier est mesurée sur des éprouvettes de mortiers prismatiques 4x4x16 cm3 préparés à 20°C en utilisant des moules métalliques et démoulées à 24h. Les éprouvettes sont conservées ensuite dans l'eau à 20°C jusqu'à l'échéance de mesure.

La résistance des échantillons obtenus est testée selon la norme EN196-1.

Les résultats des mesures de la résistance en compression (Rc) sont rapportés dans le Tableau 9 suivant.

**Tableau 9**

| | **Ciment 1** | **Ciment 2** | **Ciment 3** | **Ciment 4** | **Ciment 5** |
|---|---|---|---|---|---|
| **Rc 2 jours** | 29 | 32.6 | 49.7 | 41.7 | 59.1 |
| **Rc 7 jours** | 33.7 | 42.1 | 63.1 | 57.4 | 68.2 |
| **Rc 28 jours** | 37.5 | 42.4 | 63.7 | 61.5 | 69.7 |

Il apparait que les ciments préparés à partir de clinker contenant de plus faibles teneurs en C₂S (ciments 3, 4 et 5) possèdent une meilleure résistance mécanique que les ciments préparés à partir de clinker contenant des teneurs plus importantes de C₂S (ciments 1 et 2).

## Revendications

1. Clinker sulfo-alumineux comprenant comme composition phasique, par rapport au poids total du clinker :
- de 20 à 90 % de phase sulfoaluminate de calcium dopé en fer correspondant à la formule C₄AₓFy$_{z} avec
➢ x variant de 2 à 3,
➢ y variant de 0.05 à 0.5,
➢ et z variant de 0.8 à 1.2 ;
- de 0 à 25 % de phase aluminoferrite calcique d'une composition correspondant à la formule générale C₆A_{x'}F_{y'}, avec x' variant de 0 à 1.5 et y' variant de 0.5 à 3 ; et
- moins de 20% phase bélite C₂S ; et
- moins de 2% de phase C₁₁S₄B.

2. Clinker selon la revendication 1, **caractérisé en ce qu'**il contient de 30 à 80% de phase sulfoaluminate de calcium dopé en fer C₄AₓF_{y}$_{z}.

3. Clinker selon la revendication 1 ou 2, **caractérisé en ce que** x varie de 2.1 à 2.9.

4. Clinker selon l'une des revendications 1 à 3, **caractérisé en ce qu'**il contient de 0 à 20% de phase aluminoferrite calcique C₆A_{x'}F_{y'}.

5. Clinker selon l'une des revendications 1 à 4, **caractérisé en ce que** x' varie de 0.65 à 1.3 et/ou y' varie de 1.5 à 2.5

6. Clinker selon l'une des revendications 1 à 5, **caractérisé en ce qu'**il contient moins de 1 % de phase C₁₁S₄B.

7. Clinker selon l'une des revendications 1 à 6, **caractérisé en ce qu'**il contient moins de 15% de phase bélite C₂S.

8. Clinker selon l'une des revendications 1 à 7, **caractérisé en ce qu'**il contient moins de 3% de chaux libre CaOl.

9. Clinker selon l'une des revendications 1 à 8, **caractérisé en ce qu'**il contient moins de 5% de C$.

10. Clinker selon l'une des revendications 1 à 9, **caractérisé en ce qu'**il contient moins de 10% de C₂AS.

11. Liant hydraulique comprenant un clinker selon l'une quelconque des revendications 1 à 10.

12. Coulis comprenant un liant hydraulique selon la revendication 11.

13. Béton comprenant un liant hydraulique selon la revendication 11.

14. Mortier comprenant un liant hydraulique selon la revendication 11.

## Patentansprüche

1. Schwefel-aluminiumhaltiger Klinker, umfassend, als phasische Zusammensetzung, mit Bezug auf das Gesamtgewicht des Klinkers:
- von 20 bis 90% Kalzium-Schwefelaluminiat-Phase, dotiert mit Eisen, entsprechend der Formel C₄AₓF_{y}$_{z}, wobei
- x von 2 bis 3 variiert,
- y von 0,05 bis 0,5 variiert,
- und z von 0,8 bis 1,2 variiert;
- von 0 bis 25% Kalzium-Aluminoferrit-Phase einer Zusammensetzung, entsprechend der allgemeinen Formel C₆A_{x'}F_{y',} wobei x' von 0 bis 1,5 variiert und y' von 0,5 bis 3 variiert; und
- weniger als 20% Belit C₂S-Phase; und
- weniger als 2% C₁₁S₄B-Phase;

2. Klinker nach Anspruch 1, **dadurch gekennzeichnet, dass** er von 30 bis 80% Kalzium-Schwefelaluminat-Phase, dotiert mit Eisen C₄AₓF_{y}$_{z} enthält.

3. Klinker nach Anspruch 1 oder 2, **dadurch gekennzeichnet, dass** x von 2,1 bis 2,9 variiert.

4. Klinker nach einem der Ansprüche 1 bis 3, **dadurch gekennzeichnet, dass** er von 0 bis 20% Kalzium-Aluminoferrit-Phase C₆A_{x'}F_{y'}, enthält.

5. Klinker nach einem der Ansprüche 1 bis 4, **dadurch gekennzeichnet, dass** x' von 0,65 bis 1,3 variiert und/oder y' von 1,5 bis 2,5 variiert.

6. Klinker nach einem der Ansprüche 1 bis 5, **dadurch gekennzeichnet, dass** er weniger als 1 % C₁₁S₄B-Phase enthält.

7. Klinker nach einem der Ansprüche 1 bis 6, **dadurch gekennzeichnet, dass** er weniger als 15% Belit-Phase C₂S enthält.

8. Klinker nach einem der Ansprüche 1 bis 7, **dadurch gekennzeichnet, dass** er weniger als 3% freien Kalk CaOl enthält.

9. Klinker nach einem der Ansprüche 1 bis 8, **dadurch gekennzeichnet, dass** er weniger als 5% C$ enthält.

10. Klinker nach einem der Ansprüche 1 bis 9, **dadurch gekennzeichnet, dass** er weniger als 10% C₂AS enthält.

11. Hydraulisches Bindemittel, umfassend einen Klinker nach einem beliebigen der Ansprüche 1 bis 10.

12. Fugenmörtel, umfassend ein hydraulisches Bindemittel nach Anspruch 11.

13. Beton, umfassend ein hydraulisches Bindemittel nach Anspruch 11.

14. Mörtel, umfassend ein hydraulisches Bindemittel nach Anspruch 11.

## Claims

1. A sulfoaluminous clinker comprising as a phasic composition, relative to the total weight of the clinker:
- from 20% to 90% of iron-doped calcium sulphoaluminate phase corresponding to the formula C₄AₓF_{y}$_{z} with
➢ x varying from 2 to 3,
➢ y varying from 0.05 to 0.5,
➢ and z varying from 0.8 to 1.2;
- from 0 to 25% of calcium aluminoferrite phase of a composition corresponding to the general formula C₆A_{x'}F_{y'}, with x' varying from 0 to 1.5 and y' varying from 0.5 to 3; and
- less than 20% of belite phase C₂S; and
- less than 2% of C₁₁S₄B phase.

2. The clinker according to claim 1, **characterized in that** it contains from 30 to 80% of iron-doped calcium sulfoaluminate phase C₄AₓF_{y}$_{z}.

3. The clinker according to claim 1 or 2, **characterized in that** x varies from 2.1 to 2.9.

4. The clinker according to any of claims 1 to 3, **characterized in that** it contains from 0 to 20% of calcium aluminoferrite phase C₆A_{x'}F_{y'}.

5. The clinker according to any of claims 1 to 4, **characterized in that** x' varies from 0.65 to 1.3 and/or y' varies from 1.5 to 2.5.

6. The clinker according to any of claims 1 to 5, **characterized in that** it contains less than 1 % of C₁₁S₄B phase.

7. The clinker according to any of claims 1 to 6, **characterized in that** it contains less than 15% of belite phase C₂S.

8. The clinker according to any of claims 1 to 7, **characterized in that** it contains less than 3% of free lime CaOl.

9. The clinker according to any of claims 1 to 8, **characterized in that** it contains less than 5% of C$.

10. The clinker according to any of claims 1 to 9, **characterized in that** it contains less than 10% of C₂AS.

11. A hydraulic binder comprising a clinker according to any one of claims 1 to 10.

12. A grout comprising a hydraulic binder according to claim 11.

13. A concrete comprising a hydraulic binder according to claim 11.

14. A mortar comprising a hydraulic binder according to claim 11.
